# EUROPEAN PATENT APPLICATION

(11) **EP 4 084 281 A1**
(43) Date of publication of application: **02.11.2022**
(21) Application number: 21170845.8
(22) Date of filing: 28.04.2021
(51) Int. Cl.: H02J 50/10, H02J 50/80, H02J 50/12, H04B 5/00

(54) **WIRELESS POWER TRANSFER**

(71) Applicant: Koninklijke Philips N.V., 5656 AG Eindhoven (NL)
(72) Inventor: LULOFS, Klaas Jakob, 5656 AE Eindhoven (NL); DRAAK, Johannes Wilhelmus, 5656 AE Eindhoven (NL); LEBENS, Pascal Leonard Maria Theodoor, 5656 AE Eindhoven (NL)
(74) Representative: Philips Intellectual Property & Standards

(57) **Abstract**

A power transmitter (101) provides power to a power receiver (105) via an inductive power transfer signal. An output circuit (203, 103) generates the power transfer signal in response to a drive signal generated by a driver (201). A communicator (207) transmits messages to the power receiver (105) using amplitude modulation and receives messages from the power receiver (105) using load modulation. A controller (205) controls the driver (201) to generate the power transfer signal to apply a repeating time frame comprising a power transfer interval during which the power transfer signal is arranged to transfer power to the power receiver (105) and a communication time interval during which no power transfer signal is generated. A synchronizer (209) controls the power transmitter to transmit at least part of a first message from the power transmitter (101) to the power receiver (105) during a power transfer time interval and to receive a response message from the power receiver (105) during a communication time interval.

## Description

### FIELD OF THE INVENTION

The invention relates to wireless power transfer and in particular, but not exclusively, to high power level power transfer, such as for example for supporting kitchen appliances.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html. where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.2KW.

In order to support efficient wireless power transfer, wireless power transfer systems, such as Qi and Ki based systems, utilize substantial communication between the power transmitter and the power receiver. Initially, Qi supported only communication from the power receiver to the power transmitter using load modulation of the power transfer signal. However, developments of the standard have introduced bidirectional communication and many functions are supported by communication exchanges between the power receiver and the power transmitter. In many systems, the communication from the power transmitter to the power receiver is accomplished by modulating the power transfer signal.

However, as this tends to be less suitable for higher power levels, systems such as Ki use communication functionality that is independent of the power transfer signal and which does not use the power transfer signal as a carrier that is modulated by the data. In particular, the communication between power transmitter and power receiver may be achieved by a short range communication system such as specifically using NFC (Near Field Communication) based communication technology. Using dedicated communication functionality may in many situations provide improved performance and may e.g. provide faster communication with a higher communication reliability and a reduced impact on the ongoing power transfer.

The power receiver may in many embodiments include NFC communication functionality providing a similar communication function as an NFC contactless smart card which is typically a small device for contactless communication using electromagnetic coupling between a tuned antenna of a reader and a resonance circuit of a receiver. In many situations, the smart card is a passive device powered by the signal induced in the resonance circuit. Similarly, the NFC communication functionality of a power receiver may be powered by the NFC carrier in some situations, such as during start up.

However, although use of dedicated communication functionality such as NFC may provide advantageous performance and operation in many situations, it may not be optimal in all situations. In many situations, the communication reliability may not be perfect, and communication may include some errors and/or it may be necessary to substantially reduce the data rate to achieve a sufficiently low bit error rate.

Hence, an improved power transfer approach would be advantageous, in particular, an approach allowing increased flexibility, reduced cost, reduced complexity, improved power transfer operation, increased reliability, reduced communication errors, improved communication, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided a power transmitter for wirelessly providing power to a power receiver via an inductive power transfer signal; the power transmitter comprising: an output circuit comprising a transmitter coil arranged to generate the power transfer signal in response to a drive signal being applied to the output circuit; a driver arranged to generate the drive signal; a communicator arranged to transmit messages to the power receiver using amplitude modulation and to receive messages from the power receiver using load modulation; a controller for controlling the driver to generating of the drive signal to apply a repeating time frame to the power transfer signal comprising at least one power transfer interval during which the power transfer signal is arranged to transfer power to the power receiver and at least one communication time interval during which no power transfer signal is generated; and a synchronizer arranged to control the power transmitter to transmit at least part of a first message from the power transmitter to the power receiver during a power transfer time interval and to receive a response message from the power receiver during a communication time interval.

The invention may provide improved performance in many embodiments and may in particular in many embodiments provide improved communication between a power transmitter and a power receiver, and may provide improved power transfer in many embodiments.

The approach may provide improved performance by providing an improved trade-off between interference mitigation/ prevention and other disadvantageous effects. The Inventor's have realized that whereas interference from the power transfer signal to the communication functionality may be disadvantageous, it is not necessary to completely separate communication and power transfer but rather that improved performance may be achieved by a more careful separation that introduces and exploits asymmetries in communication and modulation to provide an improved trade-off between interference and communication performance and impacts on the general power transfer etc.

In many scenarios, the approach may allow mitigation and reduction of interference from the power transfer operation while reducing the impact on the power transfer. The approach may also in many scenarios provide improved electrical noise and/or may allow reduced mechanical noise.

The approach may allow a duration of communication time intervals in which no power transfer occurs to be reduced and may reduce interruptions to the power transfer. In many embodiments, such a reduction can be achieved without an unacceptable impact on communication performance, and indeed in many applications only a very minor impact on communication reliability may result. The approach may allow some interference from the power transfer signal to the communication but may restrict such interference to a more reliable amplitude communication while ensuring that communication using less reliable load modulation may not be subject to interference from the power transfer signal.

The communicator may be arranged to transmit messages to the power receiver using amplitude modulation of a communication carrier generated by the communicator. The communicator may be arranged to receive messages from the power receiver by demodulating load modulation of a communication carrier generated by the communicator. The communication carrier is different to the power transfer signal. The communication carrier may have a frequency that is different to a frequency of the drive signal/ power transfer signal. The communication carrier may have a frequency higher, and often no less than 10, 100, 500 times higher, than a (possibly maximum) frequency of the drive signal/ power transfer signal.

The repeating time frame may be a periodic time frame. The repeating time frame may have a fixed or variable repetition frequency/ period. The power transfer signal may be active/ on during power transfer time intervals and inactive/ off during communication time intervals.

The synchronizer may be arranged to control the power transmitter to transmit at least part of a first message from the power transmitter to the power receiver during a power transfer time interval of a first repeating time frame and to receive a response message from the power receiver during a communication time interval of the first repeating time frame.

The response message may be a message responding to the first message. The response message may be a message caused by the first message, and may be a message of a set of messages of which at least one message is required by the power receiver to be transmitted in response to the first message. The response message may be an acknowledge message from the power receiver to the first message.

The communicator may be arranged to communicate with the power receiver using a different communication carrier than the power transfer signal.

The synchronizer may be arranged to control the apparatus to transmit at least part of a first message from the power transmitter to the power receiver during a first power transfer time interval of a first repeating time frame and to receive a response message from the power receiver during a first communication time interval of the first repeating time frame.

The first message may also be referred to as a forward message or a query message.

In accordance with an optional feature of the invention, the synchronizer is arranged to adapt a timing of transmitting the first message in response to the timing property of the communication time interval..

This may provide improved performance and/or operation in many embodiments. The timing property may specifically be a start time, end time, and/or duration of the first message transmission.

In accordance with an optional feature of the invention, the synchronizer is arranged to adapt a timing property of the communication time interval.

This may provide improved performance and/or operation in many embodiments. The timing property may specifically be a start time, end time, and/or duration of the communication time interval.

In some embodiments, the synchronizer is arranged to adapt a timing property of the power transfer time interval. The timing property may specifically be a start time, end time, and/or duration of the power transfer time interval.

In accordance with an optional feature of the invention, the synchronizer is arranged to adapt at least one of the timing of the transmitting the first message and the timing property of the communication time interval in response to a property of the first message.

This may provide improved performance and/or operation in many embodiments.

In accordance with an optional feature of the invention, the property of the first message is at least one of: a length of the first message; and a property of at least one predetermined response message to the first message.

In accordance with an optional feature of the invention, the timing property is a duration of the communication time interval.

This may provide improved performance and/or operation in many embodiments.

In accordance with an optional feature of the invention, the synchronizer is arranged to adapt the duration in response to a communication rate for communicating at least one of the first message and the response message.

This may provide improved performance and/or operation in many embodiments.

In accordance with an optional feature of the invention, the synchronizer is arranged to adapt the timing property in response to a property of the response message.

This may provide improved performance and/or operation in many embodiments. The property of the second message may specifically be at least one of a transmission duration and a length of the response message.

In accordance with an optional feature of the invention, the driver is supplied by a varying power supply signal and the synchronizer is arranged to adapt the timing property in response to a timing of variations in the varying power supply signal.

This may provide improved performance and/or operation in many embodiments, and may specifically reduce the impact of interruptions to the power transfer signal.

In accordance with an optional feature of the invention, the synchronizer is arranged to align a center time of the communication time interval with a signal minimum for the varying power supply signal.

This may provide particularly advantageous operation and/or performance in many embodiments, and may e.g. minimize the impact of interruptions to the power transfer signal in some embodiments, and may e.g. provide increased margin and robustness to variations in e.g. a delay in responding by the power receiver.

In accordance with an optional feature of the invention, a duration of the communication time interval does not exceed 1 msec.

In accordance with an optional feature of the invention, the synchronizer is arranged to terminate the communication time interval in response to a detection of an end of the response message.

This may provide improved performance and/or operation in many embodiments.

In accordance with an optional feature of the invention, the power transfer time interval comprises a power down interval immediately prior to the communication time interval and the synchronizer is arranged to time a transmission of the first message to at least partly be transmitted during the power down interval.

This may provide improved performance and/or operation in many embodiments.

According to an aspect of the invention there is provided a method of operation for a power transmitter wirelessly providing power to a power receiver via an inductive power transfer signal; the power transmitter comprising: an output circuit comprising a transmitter coil arranged to generate the power transfer signal in response to a drive signal being applied to the output circuit; and the method comprising: generating the drive signal; transmitting messages to the power receiver using amplitude modulation and receiving messages from the power receiver using load modulation; controlling the driver to generating of the drive signal to apply a repeating time frame to the power transfer signal comprising at least one power transfer interval during which the power transfer signal is arranged to transfer power to the power receiver and at least one communication time interval during which no power transfer signal is generated; and controlling the power transmitter to transmit at least part of a first message from the power transmitter to the power receiver during a power transfer time interval and to receive a response message from the power receiver during a communication time interval.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of a half bridge inverter for a power transmitter;
FIG. 4 illustrates an example of a full bridge inverter for a power transmitter;
FIG. 5 illustrates an example of elements of an NFC reader functionality and an NFC card functionality;
FIG. 6 illustrates an example of elements of a power receiver in accordance with some embodiments of the invention;
FIG. 7 illustrates an example of a repeating time frame for a power transfer signal;
FIG. 8 illustrates an example of communication of messages in a communication time interval;
FIG. 9 illustrates an example of communication of messages in a wireless power transfer system in accordance with some embodiments of the invention;
FIG. 10 illustrates an example of communication of NFC messages;
FIG. 11 illustrates an example of communication of messages in a wireless power transfer system in accordance with some embodiments of the invention; and
FIG. 12 illustrates an example of communication of messages in a wireless power transfer system in accordance with some embodiments of the invention.

### DETAILED DESCRIPTION OF THE EMBODIMENTS

The following description focuses on embodiments of the invention applicable to a high power wireless power transfer system utilizing a power transfer approach such as known from the Ki Specification. However, it will be appreciated that the invention is not limited to this application but may be applied to many other wireless power transfer systems.

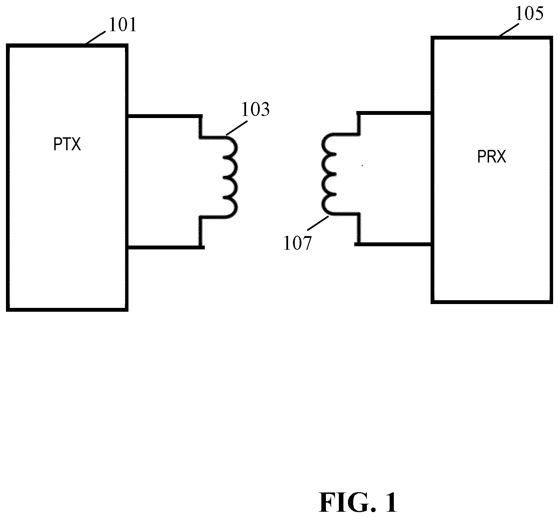

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and specifically for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 100 W and up to more than 2000W for very high power applications, such as e.g. for Ki kitchen applications.

In the following, the operation of the power transmitter 101 and the power receiver 105 will be described with specific reference to an embodiment generally in accordance with the Ki Specifications (except for the herein described (or consequential) modifications and enhancements).

Many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The appliance sends this error signal to the power control function in the power transmitter to reduce the static error, ideally to zero.

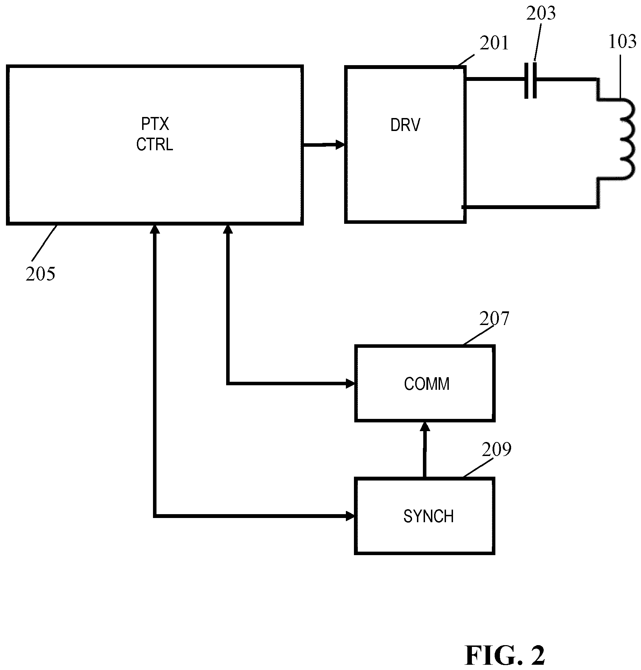

FIG. 2 illustrates elements of the power transmitter 101 of FIG. 1 in more detail.

The power transmitter 101 includes a driver 201 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 203. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

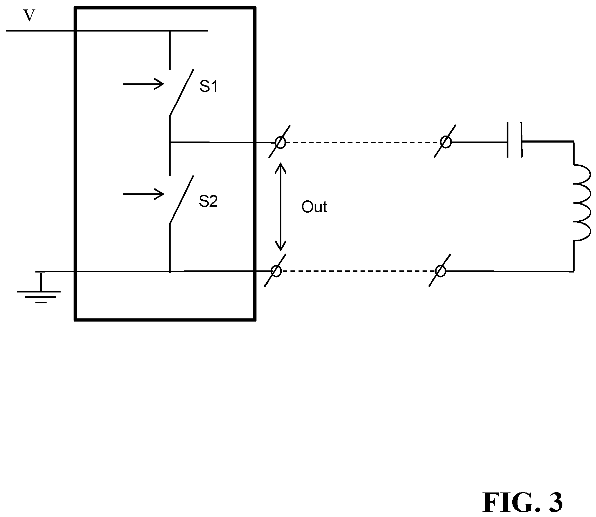

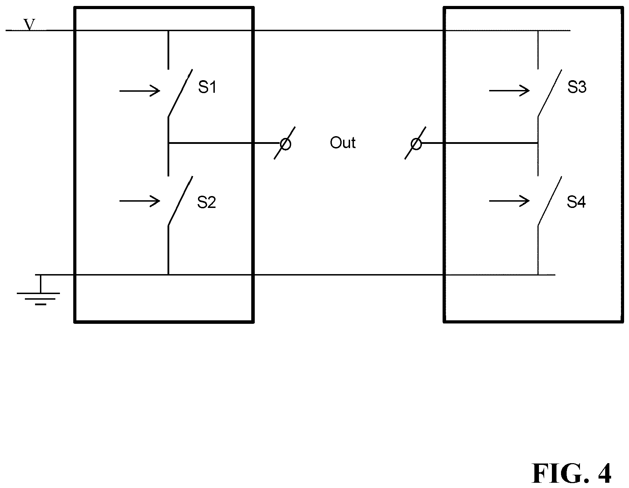

The driver 201 generates the current and voltage which is fed to the output resonance circuit and thus to the transmitter coil 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches S1 and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 205 which is arranged to control the operation of the power transmitter 101 in accordance with the desired operating principles. Specifically, the power transmitter 101 may include many of the functionalities required to perform power control in accordance with the Ki Specification.

The power transmitter controller 205 is in particular arranged to control the generation of the drive signal by the driver 201, and it can specifically control the power level of the drive signal, and accordingly the level of the generated power transfer signal. The power transmitter controller 205 comprises a power loop controller controlling a power level of the power transfer signal in response to the power control messages received from the power receiver 105 during the power transfer phase.

The power transmitter 101 further comprises a first communicator 207 which is arranged to communicate with a complementary communicator of a power receiver. The first communicator 207 is specifically arranged to generate a carrier signal and to communicate with the (complementary communicator of the) power receiver using the carrier. In particular, communication from the power transmitter to the power receiver is by amplitude modulation of the carrier and/or communication from the power receiver to the power transmitter may specifically be by load modulation of the carrier signal generated by the first communicator 207.

The first communicator 207 is specifically arranged to set up a short range communication channel with the complementary communicator. A short range communication channel may for example be a communication channel having a range that does not exceed 30cm, 50cm, 1m, 2m, or 3m depending on the preferences and requirements of the individual embodiment. The short range communication channel may be a communication channel that does not use the power transfer signal as a communication carrier. Rather the first communicator 207 generates a communication carrier which is used for the communication and thus the first communicator 207 may be a separate short range communicator that does not utilize the power transfer signal for communication.

Specifically, the first communicator 207 may be arranged to communicate in accordance with a separate short range communication standard, and the first communicator 207 may be arranged to communicate using a Near Field Communication (NFC) channel. Thus, the first communicator 207 may be an NFC communicator. It will be appreciated that in other embodiments, other means of short range communication may be used. The following description will however focus on examples where the communication between the power transmitter and the power receiver uses NFC communication.

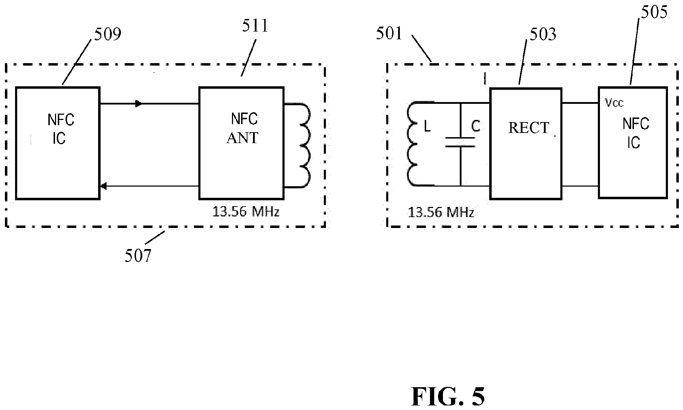

The first communicator 207 may specifically be arranged with functionality corresponding to an NFC smart card reader. Similarly, the complementary receiver of the power receiver (the second communicator 609 as introduced later) may be arranged with functionality corresponding to an NFC smart card. An example of such functionality may be described with reference to the example of FIG. 5.

As illustrated, an NFC smart card function 501 (e.g. corresponding to the communication functionality of the power receiver) may electrically typically comprise an antenna coil L, a tuning capacitor C, a rectifier 503 and an NFC chip 505 at least sometimes powered by the signal extracted by the resonance circuit formed by the capacitor C and the coil L. In most cases the parallel resonance of a smart card is tuned to a resonance frequency of 13.56 MHz.

FIG. 5 also illustrates a simplified model of an NFC reader functionality 507 (e.g. corresponding to the communication functionality of the power transmitter) for reading the data stored in the smart card. An NFC reader typically comprises an NFC reader chip 509 and an NFC antenna 511 which is also tuned at a resonance frequency of 13.56 MHz. If the smart card functionality 501 (specifically the receiver coil) is brought into the proximity of the NFC reader function 507 (specifically the antenna coil L), the antenna coil L is exposed to the 13.56 MHz magnetic field from the NFC reader function 507 and the NFC chip 505 powers up via the Vcc pin. Once powered up, the NFC chip 505 in the smart card function is able to modulate its own Vcc by means of load modulation thereby sending data back to the NFC reader function 507. The time between powering up of the NFC chip 505 in the smart card and the sending of information back to the NFC Reader function 507 is typically in the range of about 30 - 50 mSec.

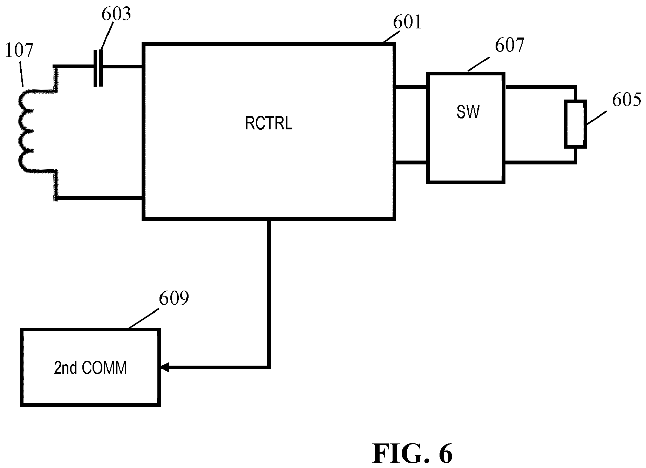

FIG. 6 illustrates some exemplary elements of the power receiver 105.

In the example, the receiver coil 107 is coupled to a power receiver controller 601 via a capacitor 603 which together with the receiver coil 107 forms an input resonance circuit. Thus, the power transfer may be a resonant power transfer between resonance circuits. In other embodiments, only one, or none, of the power receiver and the power transmitter may utilize a resonance circuit for power transfer.

The power receiver controller 601 couples the receiver coil 107 to a load 605 via a switch 607. The power receiver controller 601 includes a power control path which converts the power extracted by the receiver coil 107 into a suitable supply for the load 605. In some embodiments, the power receiver controller 601 may provide a direct power path which simply connects the input resonance circuit to the switch 607 or load 605, i.e. the power path of the power receiver controller 601 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 607 may only be present in some embodiments and that in some embodiments the load 605 may permanently be coupled to the input resonance circuit.

In addition, the power receiver controller 601 may include various power receiver controller functionality required to perform power transfer, and in particular functions required to perform power transfer in accordance with the Qi or Ki Specifications.

The power receiver controller 601 further comprises a second communicator 609 which is arranged to communicate data with the power transmitter. The second communicator 609 is the complementary communicator to the first communicator 207 and is specifically arranged to establish the short range communication channel with the first communicator 207. The second communicator 609 may specifically be an NFC communication unit/ device supporting communication over an NFC communication channel, and may as previously described implement functionality similar to an NFC smart card.

The second communicator 609 is specifically arranged to receive data transmitted by the first communicator 207 over the short range communication channel. Further, the second communicator 609 is also arranged to transmit data to the first communicator 207.

It will be appreciated that in some embodiments, communication between the power transmitter and power receiver may also be possible via a second, typically parallel, communication channel which specifically may be supported by the power transfer signal. For example, the power receiver may load modulate the power transfer signal or the power transmitter may modulate the power transfer signal directly.

In operation, the system is arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

At regular, and typically frequent, intervals, the power receiver transmits a power control error message to the power transmitter. In some embodiments, a direct power setpoint change message may be transmitted indicating a desired absolute power level (rather than a relative error message). The power receiver 105 comprises functionality for supporting such a power control loop, e.g. the power receiver controller 601 may continuously monitor the power or voltage of a load signal provided to the load and detect whether this is above or below a desired value. It may at regular intervals generate a power control error message which requests that the power level of the power transfer signal is increased or decreased, and it may transmit this power control error message to the power transmitter.

The system thus in many embodiments uses NFC as medium to communicate between the wireless power transmitter and power receiver. An advantage of NFC is that due to the very short range nature of the communication channel it provides a one to one physical relation between the power and communication coils such that the risk of communication between the power transmitter and a power receiver that is not the one being powered by the power transmitter is very small. Additionally, the NFC carrier can be harvested and used to supply power to the wireless receiver communication electronics without starting the power transmitter.

However, an issue for communication in a wireless power transfer system, including one using NFC, is that the communication may susceptible to interference from the power signal. Whereas the communication carrier may have a very different frequency than the operating frequency of the drive signal and power transfer signal (e.g. 13.56MHz relative to 20-80kHz), the power level of the power transfer signal in systems such as Ki may be very high and is typically several orders of magnitude higher than the power of the communication carrier. Accordingly, substantial cross-interference may occur which may impact communication performance and consequently performance of the power transfer as a whole.

In many systems, such as specifically in Ki, this problem has been addressed by separating the power transfer and the NFC communication in time, and specifically a time division approach may be used where a repeating time frame is divided into at least one power transfer interval and one communication time interval. In such cases, power transfer may only be performed outside the communication time interval and thus interference from the power transfer to the communication may be avoided.

In the example of FIGS. 1 and 2, the driver 201 is arranged to generate the drive signal to employ a repeating time frame for the drive signal and the power transfer signal during the power transfer phase.

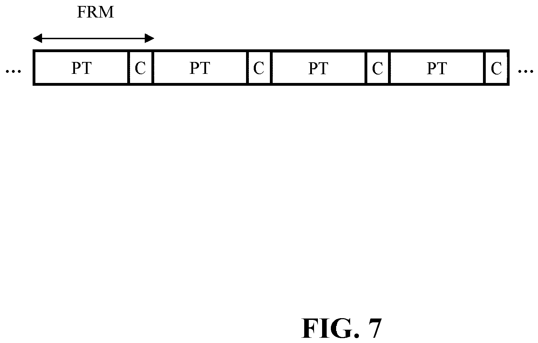

The repeating time frame comprises at least one power transfer time interval and one communication time interval. An example of such a repeating time frame is illustrated in FIG. 7 where power transfer time intervals are indicated by PT and the communication time intervals are indicated by C. In the example, each time frame FRM comprises only one communication time interval C and one power transfer time interval PT and these (as well as the time frame itself) have substantially the same duration in each frame. However, it will be appreciated that in other embodiments, other time intervals may also be included in a repeating time frame (such as e.g. foreign object detection intervals) or a plurality of communication time intervals and/or power transfer time intervals may be included in each time frame. Furthermore, the duration of the different time intervals (and indeed the time frame itself) may in some embodiments vary dynamically as will be described later.

In the example, power transfer is performed in the power transfer time intervals. The driver is arranged to generate the drive signal and thus the power transfer signal during the power transfer time intervals and specifically a drive signal having a non-zero amplitude/ power is generated during the power transfer time intervals. However, during the communication time intervals no power transfer signal is generated. Typically, this is achieved by the driver 201 not generating a drive signal (or equivalently the drive signal is controlled to have an amplitude/ power of zero or close to zero (e.g. specifically less than an amplitude threshold of 0, 1, 2, 3 or 5, or 10V and/or a power threshold of less than 1, 2, 3, 5, 10W or e.g. 1, 2, 3, 5, or 10% of a maximum power for the power transfer).

In some embodiments, it may be possible to attenuate the power transfer signal sufficiently during the communication time intervals by damping or shielding the output circuit during the communication time intervals but not during the power transfer time intervals.

Using such a repeating time frame, communication and power transfer can be separated in the time domain thereby resulting in substantially reduced (and possibly no) cross-interference from the power transfer to the communication operation. Thus, the interference caused to the communication from the power transfer signal may be substantially reduced and may indeed be reduced to substantially zero. This may very substantially improve communication performance and reliability thereby leading to improved and more reliable power transfer operation.

In the power transfer phase, the power transmitter is thus arranged to perform power transfer during the power transfer time interval of the time frames. Specifically, during these time intervals, the power transmitter 101 and the power receiver 105 may operate a power control loop. The power control loop may be based on communication within the power transfer time interval or may e.g. be based on communication outside of the power transfer time interval, such as in dedicated communication time intervals. Thus, the level of the power being transferred may be dynamically varied. In the communication time intervals, the power transfer signal is effectively switched off, but power control error messages for controlling the power loop operations during the power transfer time intervals may be communicated.

However, whereas such time separation between communication and power transfer may provide a number of substantial advantages it may also have some associated disadvantages. For example, the repeated interruption may in many situations result in audible noise (e.g. caused by the mechanical effects of surrounding object in response to the variations in the generated magnetic field). Also, the switching on and off of the drive signal and power transfer signal may result in amplitude harmonics that may generate electrical and electromagnetic noise. For example, interupting the power signal may generate electro magnetic interferece (50Hz harmonics) on to the mains supply. The larger the interuption in power due to the communication time interval, the larger a filter to suppress noise will need to be. A larger communication time interval may also result in switching on/off of power occurs for higher power levels which may result in increased mains related noise and potentially more electromagnetic interference being geenrated.

Further, the lack of a power transfer signal during the communication time intervals require the power to be provided during a shorter time resulting in a higher power level being required during the power transfer time intervals. Further, as the power transfer may be intermittent, it is for many applications necessary for the power receiver to comprise some form of energy reservoir (e.g., a capacitor) to maintain power supply during the communication time intervals. In many approaches, a requirement to switch off power transfer in order to communicate may result in the communication being restricted to short data messages in order to minimize the duration of the power transfer disruptions. The disadvantages tend to be of increasing significance for increasing power transfer levels and tend to be very significant for applications such as Ki which may be used to transfer very high power levels. In the approach of FIG. 1, the system is arranged to reduce the communication time intervals to have a lower duration than for typical conventional systems. The system is specifically arranged to employ an asymmetric communication approach with respect to transmitting and receiving by the power transmitter (and the power receiver). It may in particular use difference modulation formats in the forward (power transmitter to power receiver) direction and in the reverse (power receiver to power transmitter) directions and with different timings and relationships to the power transfer time interval and communication time interval in the two directions.

The power transmitter 101 specifically comprises a synchronizer 209 which is arranged to control the power transmitter 101 to transmit at least part of one or more messages from the power transmitter to the power receiver during a power transfer time interval and using amplitude modulation. The synchronizer 209 is further arranged to control the power transmitter 101 to receive one or more response messages from the power receiver using load modulation and during a communication time interval. Thus, one or more forward messages are transmitted during the power transfer time intervals using amplitude modulation whereas response messages in the reverse direction are received during the communication time intervals and using load modulation.

The approach may thus employ an asymmetric approach such that the forward communication is not transmitted during the communication time intervals reserved for interference free communication but rather is transmitted during the power transfer time interval whereas the response from the power receiver is transmitted during the communication time intervals.

The synchronizer 309 may be arranged to control the timing of the communication and/or power transfer time intervals and/or the timing of the forward message and/or the response message such that the forward message occurs (at least partially) during a power transfer time interval but such that the response message to the forward message occurs (at least partly) during a communication time interval. Thus, the synchronizer 309 is arranged to control the operation such that the forward message may be sent simultaneous with power transfer whereas the response message concurs with there being no power transfer. Thus, the forward message may be transmitted while allowing interference from the power transfer signal to be present whereas the response message is communicated when no such interference occurs.

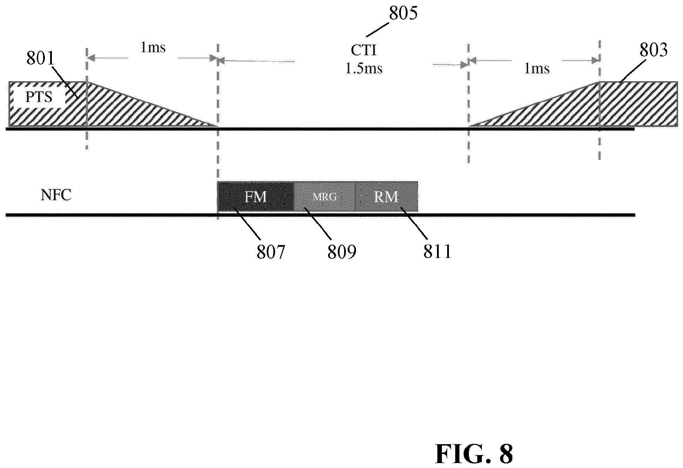

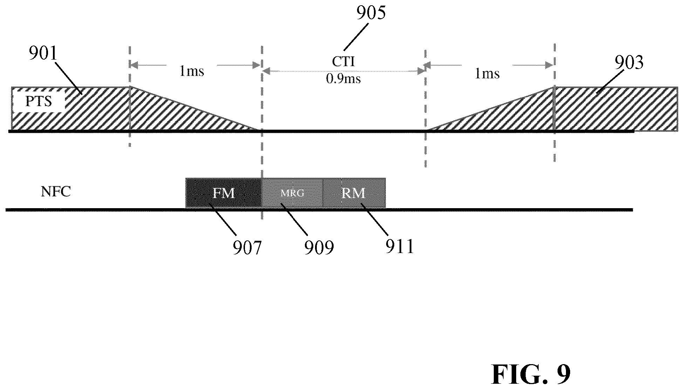

The approach may be illustrated with reference to FIGS. 8 and 9 which illustrate an example where a first power transfer interval 801, 901 and a second power transfer time interval 803, 903 are separated by a communication time interval 805, 905 as illustrated by the amplitude of the power transfer signal (PTS).

The example of FIG. 8 represents an approach that the current approach may improve upon. In the example of FIG. 8, the first communicator 207 and the power transmitter transmits a first forward message 807 which may specifically be a setpoint/power request measage to which the receiver is required to respond with a message indicating the desired power level message, during a communication time interval, i.e. while power transfer is stopped.

As another example, in some systems the power transmitter may be arranged as a master such that data can only be transmitted from the power receiver when requested by the power transmitter. In such cases, the power transmitter may transmit a forward message to inquire whether the power receiver has any pending data or messages to transmit to the power transmitter. The power receiver may then respond to this inquiry. Thus, in some cases, even if the power transmitter has no need for any data communication, a forward message may be transmitted to the power receiver to check with the power receiver has any pending transmissions (i.e. the forward message may be used to poll the power receiver for any potential data communication).

Following the transmission of the forward message there is a margin or handover interval 809 during which no message is transmitted in either direction. The handover interval 809 may for example be used to allow the power receiver to process the forward message before responding to it, may provide a delay to ensure that circuitry can be setup for reverse communication etc. Thus, the handover interval 809 may reflect a delay between the transmission of an amplitude modulated read or write message and the load modulated response. This may be needed for switching from transmitting to receiving by the transmitter and to prepare and answer by the receiver.

Following the handover interval 809, the second communicator 509 and power receiver transmit a response message 811 to the power transmitter.

In the example of FIG. 8, the communication is performed during the communication time interval 805 and thus interference from the power transfer signal may be avoided completely. However, it is inherently required for such an approach that the communication time interval 805 has a duration exceeding the timing of the communication. For typical message of Ki, this requires that a communication time interval duration exceeds 1.5 msec. Typical durations of a single time frame is 10 msec, so a relatively high proportion of the total time may be required for the communication and be excluded from power transfer.

FIG. 9 shows a corresponding example in the approach used by the system of FIGS. 1, 2, and 6. In this approach, the transmission of a forward message 907 is initiated and typically also completed within the first power transfer interval 901. However, the handover time interval 909 and the response message 911 are timed to fall within the communication time interval 905 between the first power transfer time interval 901 and a subsequent second power transfer time interval 903. In many embodiments, part, or indeed the whole of the handover interval 909 may be within the first power transfer time interval 901. As a result, in the approach of FIG. 9, the forward message 907 is transmitted while interference may occur whereas the response message is communicated during a time when no interference from the power transfer signal occurs. However, as the forward message is communicated using amplitude modulation and the response message is communicated using load modulation, reliable communication can be achieved in both directions despite the difference in the interference conditions. Further, the approach may result in the duration of the communication time intervals being potentially substantially reduced. For example, in the specific example, a forward Ki message will have a duration of 600 µs or more and transmitting this message during the power transfer interval 901 allows the duration of the communication time interval 905 to be reduced from 1.5 msec to at least 0.9 msec. This reduction may improve operation and in particular may provide a more efficient power transfer, may reduce mechanical noise, may reduce electrical noise and harmonic generation, and/ or may allow for increased amounts of data to be transmitted.

The approach may exploit that the modulation formats in the forward and reverse directions are different and that specifically amplitude modulation may allow a robust communication that may be robust to interference from the power transfer signal, whereas the communication in the reverse direction may use load modulation which may be highly sensitive to interference from the power transfer signal.

The approach may be particularly suitable for NFC communication. For example, the power transmitter may first transmit a continuous communication carrier of 13.56MHz. Next the power transmitter may initiate communication by sending a read or write command to the power receiver. The power transmitter may in the forward direction use 100% amplitude modulation of the communication carrier (amplitude shift keying that switches the carrier on/off).

The power receiver may respond to the message/ command by sending data or an acknowledge back to the power transmitter. The power receiver may perform this communication by load modulating the communication carrier generated by the first communicator 207. This modulation may be achieved e.g. by detuning the receiver resonance NFC circuit, or by adding extra resistance, as will be known to the skilled person. As a result, the amplitude of the signal fed at the transmitter side will change but the change is typically very small (typically only a few percent).

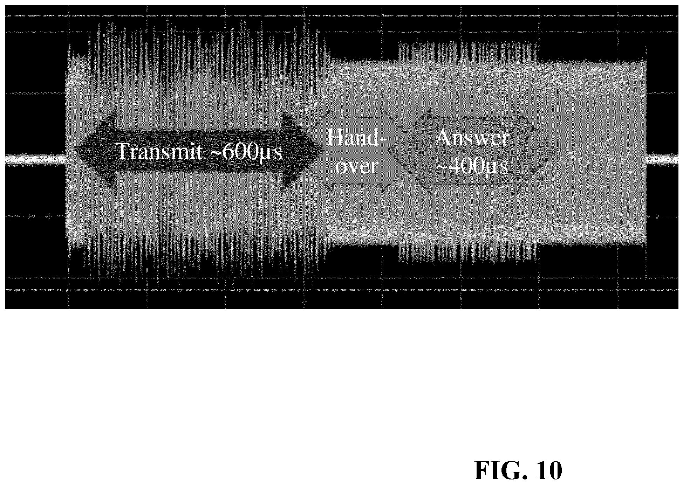

This relative small amplitude change at the transmitter coil has to be detected by the first communicator 207 in order to receive data form the power receiver. Because the load modulation results in very small variations, it tends to be substantially more sensitive to interference than for the 100% AM modulation applied in the forward direction. An example of the amplitude variations for the communication carrier for the different messages is illustrated in FIG. 10.

In the example of Ki and using NFC, an interruption of the power transfer signal of 1.5msec may currently be used to communicate in both directions. This may be reduced substantially by only interrupting the power transfer signal when data is transmitted from the power receiver to the power transmitter and not when communication is in the other direction. Indeed, out of the 1.5ms gap, at least 600µs is used for transmitting a read command from the power transmitter to the power receiver. By keeping the power on during transmission of a command, this power gap can be shortened by at least 600 µs. In fact, 600 µs is the shortest read command used in Ki. Longer forward commands/ messages may be started even sooner allowing for potentially an even shorter gap (depending on the timing of the response message).

The duration of the communication time interval may be reduced in many embodiments, and often the duration may not exceed 1 msec, 0.5. msec, 0.2 msec, or 0.1 msec.

It will be appreciated that exact approach of the synchronization of the communications and the repeating time frames may depend on the preferences and requirements of the individual embodiment and application.

In many embodiments, the synchronizer 209 may be arranged to perform the synchronization by adapting a timing of the transmission of the first message and/or the timing of receiving the response message. Alternatively or additionally, in many embodiments, the synchronizer 209 may be arranged to adapt a timing property of the communication time interval and/or power transfer time interval. Thus, in some embodiments, the synchronizer 209 may be arranged to adapt a timing property of the repeating time frame.

For example, in some embodiments, the timing of the transmission of the first message and the timing of the response message may be fixed and the synchronizer 209 may be arranged to control the timing of the communication time interval such that the transmission of the first message is during a power transfer time interval and the response message is during the communication time interval. This may for example be achieved by controlling the end time of the power transfer time interval, e.g. by controlling the time at which the power transfer signal is switched off to create the gap corresponding to the communication time interval. Similarly, the start of the following power transfer time interval may be adapted to begin at a time after which the response should be, or has been, received. Equivalently, the communication time intervals may be adapted by controlling the timing of the switching off and/or on of the power transfer signal.

In many embodiments, the synchronizer 209 may be arranged to adapt the timing property of a communication time interval, a power transfer time interval, the transmission of the first message and/or of when the first communicator 207 is arranged to receive the response message from the power receiver based on a property of the first message. The property may specifically be a length of the first message or an expected time for transmission of the first message.

For example, in some embodiments, the system may use a fixed repeating time frame with a 10 msec time period which is divided into a power transfer time interval with a duration of 9.1 msec and a communication time interval of 0.9 msec. The synchronizer 209 may comprise a table of possible forward messages that can be transmitted and a duration of transmission for each message (e.g. determined as the number of bits divided by the transmission rate in bits/seconds). For each repeating time frame, in which a first message is to be transmitted, the power transmitter controller 205 may indicate which message is transmitted and the synchronizer 209 may determine the corresponding duration for transmitting the message. It may then control the first communicator 207 to start transmitting the first message at a time which corresponds to the end of the power transfer time interval minus the duration of transmitting the message, i.e. it may control the transmission time of the first message such that it ends at the end of the power transfer time interval.

The synchronizer 209 may then control the first communicator 207 to receive any message from the second communicator 609, i.e. any message communicated by the NFC load modulation functionality of the second communicator 509, during the communication time interval. Thus, the first communicator 207 may be arranged to switch from a transmitting configuration/ operation during fractional time intervals to a receiving configuration/ operation during the communication time intervals.

In many embodiments, the synchronizer 209 may be arranged to adapt the timing property of a communication time interval, a power transfer time interval, the transmission of the first message and/or of when the first communicator 207 is arranged to receive the response message from the power receiver based on a property of an expected property of the response message. The response message may depend on the first message, and thus the adaptation may be based on the first message and on the expected response message to this first message.

For example, some first messages may simply require a response message in the form of a single acknowledge message, which could be implemented by as little as a single bit acknowledgement. For other first messages, a response message may be required to include data, and may include many more bits.

In some embodiments, the synchronizer 209 may include a table which for each possible first message stores a maximum length of the response messages that the power receiver may transmit back to the power transmitter. The synchronizer 209 may in some embodiments be arranged to adapt a duration of the communication time intervals based on the properties of the expected response message and may specifically adapt the duration of the communication time interval such that it is (just) long enough for the longest possible response message to the first message to be received before the end of the communication time interval.

The duration of the communication time intervals may for example be adapted by changing a start time and/or and end time of the communication time interval. Specifically, a timing of the switching on or switching off of the power transfer signal may be controlled. In some embodiments, a timing of the transmission of the first message may for example be adapted based on the response message, such as for example by adapting the timing of the transmission of the first message being synchronized such that it matches the timing of a communication time interval that has been adjusted to just allow the response message to be transmitted within a communication time interval.

Thus, the synchronizer 209 may be arranged to set a timing property of the transmission of the first message and/or the communication time interval based on a property of the first message, such as the length of the first message, and/or based on a property of the (expected) response message, such as the expected or maximum length of the response message.

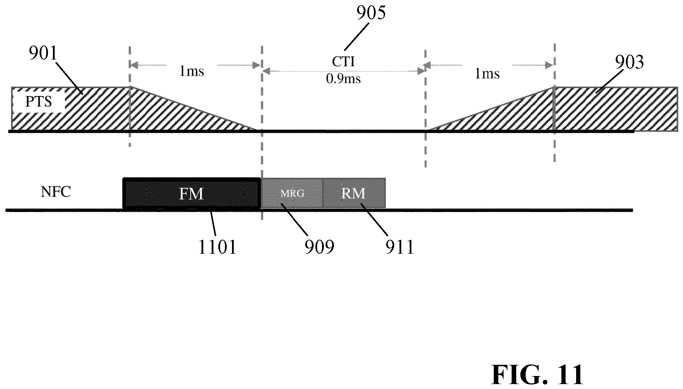

FIG. 11 illustrates an example corresponding to the example of FIG. 9 but where the first message is substantially longer. In the example, the synchronizer 209 may be arranged to adapt the start of the transmission of the first message to be earlier such that the end of the first message still ends at the end of the first power transfer time interval.

In some embodiments, the synchronizer 209 may be arranged to adapt the duration in response to a communication rate for communicating at least one of the first message and the response message. The communication rate for transmission in the first message and/or the response message may in some embodiments be variable. For example, for a larger distance between the first communicator 207 and the second communicator 509, the system may be arranged to reduce the communication rate to compensate for an increased bit error rate. In such cases, it may take longer to communicate the messages and the synchronizer 209 may take this into account in determining a transmission duration for the first message and/or the response message and to adapt the timing correspondingly. The communication duration may simply be determined by e.g. the length of the message in bits divided by the communication rate in bits per seconds.

In some embodiments, the synchronizer 209 may specifically be arranged to terminate the communication time interval in response to a detection of the end of the response message.

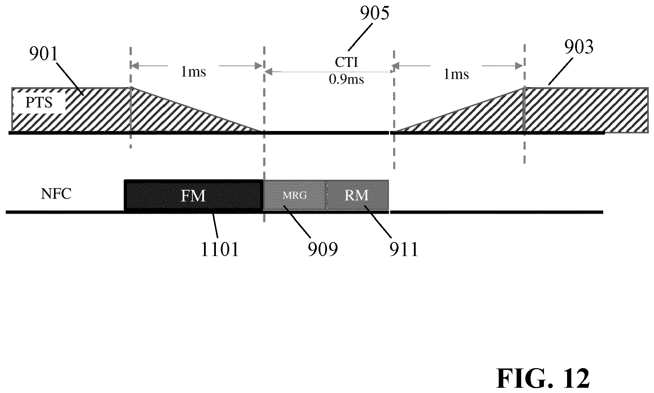

For example, for a variable length response message, it may be detected that all data of the message has been received (e.g. by detecting a stop indication and/or from knowledge of how many bits the variable length message has in the specific current conditions). As soon as the end of the message has been detected, the synchronizer 209 may proceed to control the power transmitter controller 205 to control the driver 201 to generate a drive signal, and thus for the power transmitter to switch on the power transfer signal and for the subsequent power transfer interval to be started. Thus, in such a case, the power transmitter may automatically adapt the communication time interval to match the length of the variable message for each repeating time frame. An example of this approach corresponding to the example of FIG. 11 is illustrated in FIG. 12.

In some embodiments, the switching off of the power transfer signal may be abrupt and the driver 201 may for example simply switch the drive signal off at the end of the power transfer time interval. However, in many embodiments, the power transmitter controller 205 may be arranged to introduce a gradual reduction of the power level of the power transfer signal and may specifically be arranged to introduce a power down interval immediately prior to the communication time interval and at the end of the power transfer time interval.

For example, at a predetermined time interval before the end of the power transfer time interval, the power transmitter may initiate a gradual reduction of the power level of the power transfer signal such that a smooth transition occurs until the power level has reduced to zero at the end of the power transfer time interval. In the examples of FIGS. 9, 11, and 12, a power down time interval of 1 msec is introduced to gradually reduce the power level to zero from an initial value.

The power down interval may allow a gradual transition which can reduce the higher frequency/ harmonic noise that may otherwise be introduced and may e.g. mitigate switch transients etc. In many embodiments, the power down interval may follow a power level curve for the power transfer signal for which a gradient does not exceed 1, 2, 3, 5 or 10 times Pₘₐₓ/msec where Pₘₐₓ is the maximum instantaneous power of the power transfer signal during a repeating time frame. In many embodiments, the power down interval may follow a power level curve for the power transfer signal for which a gradient is not below 1, 0.5, 0.3, 0.2, or 0. 1times Pₘₐₓ/msec where Pₘₐₓ is the maximum instantaneous power of the power transfer signal during a repeating time frame.

The synchronizer 209 may in embodiments with a power down interval be arranged to time the transmission of the first message so that it, at least partly, is transmitted during the power down interval. In many embodiments, the power down time interval is longer than the duration of the transmission of the first message and the first message may be transmitted entirely within the power down time interval.

The introduction of a power down time interval may not only provide a more efficient switching and power down operation but may also allow improved communication of the first message. In particular, the reduced power levels may reduce interference to the transmission of the first message from the power transfer signal.

In many embodiments, the start of a power transfer time interval following a communication time interval may include a power up time interval in which the power level is gradually increased. In the example of FIGS. 9, 11, and 12 a power up time interval having a duration of 1 msec is utilized.

In many embodiments, the driver 201 may be supplied by a varying power supply signal, and typically by a varying supply voltage. The drive signal may typically be generated to have an amplitude that follows the varying power supply signal and specifically that follows the varying supply voltage. For example, for an output inverter of the driver 201 corresponding to e.g. FIG. 3 or 4, the drive signal will have an amplitude equal to the supply voltage except for a small voltage drop over the switch elements.

For example, in many embodiments, the supply voltage for the driver 201 and output inverter may be generated from a rectified (and possibly partially smoothed) AC mains voltage. For a non-smoothed and rectified voltage, the input supply voltage, and thus the drive signal voltage, will reach a minimum of zero volts at times corresponding to the zero crossings of the mains voltage. For partially smoothed rectified supply voltages, the minimum voltage may occur with a delay relative to the zero crossings and may by higher than zero volts.

In embodiments where the supply to the driver 201 is varying, the synchronizer 311 may be arranged to adapt a timing property for the power transfer time intervals, the communication time intervals, and/or the transmission of the first message (and/or the receiving of the second message) in response to the timing of the variations of the power supply signal. Typically, the synchronizer 209 may be arranged to adapt the timing of all these features depending on the supply variations.

Specifically, the synchronizer 209 may be arranged to synchronize the communication time intervals to minima in the supply signal/ voltage. The synchronizer 209 may be arranged to synchronize the communication time interval such that the time of minima of the varying power supply signal fall within the communication time intervals.

In particular, in many embodiments, the synchronizer 209 may be arranged to control a timing of the communication time intervals such that they are centered around the time of the minima of the varying power supply signal, and thus typically also around the minima of the power transfer signal. In many embodiments, the synchronizer 209 may be arranged to control the timing of the communication time intervals such that they are substantially centered around the zero levels of the input supply voltage (often zero crossings of the input mains voltage).

Similarly, the synchronizer 209 may be arranged to adapt the timing of other features, such as the start time of the communication time interval, the start of the power down time interval, the timing of the power transfer time interval, and the transmission time of the first message depending on the timing of the power supply variations.

The timing may in some embodiments be adapted for each individual repeating time frame, or may e.g. be determined for, and applied to, a plurality of subsequent repeating time frames.

As an example, in some embodiments, the synchronizer 209 may synchronize repeating time frames to the variations in the power supply. For the driver 201 being supplied by a rectified mains voltage of 50 Hz, a zero crossing of the mains, and thus a minimum of the rectified supply voltage, occurs at 10 msec intervals, and each repeating time frame may be set to have a duration of 10 msec.

The synchronizer 209 may first evaluate a first message that is to be transmitted in the next repeating time frame (e.g. as indicated by the power transmitter controller 205 or the first communicator 207). It may then proceed to determine the duration of the first message and the maximum duration of a response message to the first message. This may for example be determined based on a table look-up. The synchronizer 209 may then determine the duration of the communication time interval, and specifically may determine it such that it is sufficiently long for the response message to be transmitted fully within the communication time interval including adding a sufficient time margin to allow uncertainties and variations in the response time of the power receiver to the first message.

Once the duration of the communication time interval has been determined, the start time of the communication time interval relative to the time of the minimum supply voltage may be determined. Specifically, the start time of the communication time interval may be determined such that the center time of the communication time interval aligns with the signal minimum for the varying power supply signal. Specifically, the synchronizer 209 may adapt the start time and/or duration of the communication time interval such that the center time coincides with the time of the minimum supply signal. In the example, the start time may be determined as half the duration of the communication time interval prior to the zero crossing/ minimum for the power supply signal/ voltage.

The start time of the communication time interval may also be the end time of the previous power transfer time interval and the end time of the communication time interval may be the start time of the subsequent power transfer time interval. Thus, the synchronizer 209 may control the driver 201 to switch the drive signal and power transfer signal off and on at these times.

In embodiments where a power down interval is employed, the start time of this power down time interval may be determined. For example, a predetermined duration and power profile for the power down time interval may be used and the start time for the power down operation may be determined by subtracting this duration from the determined start time of the communication time interval. The synchronizer 209 may then control the power transmitter controller 205 to initiate the power down profile at this time.

If a power up time interval is employed, the synchronizer 209 may control the power transmitter controller 205 to initiate the power up according to a suitable power up profile at the end time of the communication time interval.

The synchronizer 209 may further determine a timing for transmitting the first message. The transmission of the first message may specifically be such that it is expected to result in a transmission of a response message (specifically of maximum duration) that is centered in the communication time interval.

For example, for a given first message, it may be known what possible response messages can be received and what the maximum duration is. Further, following the receipt of the first message, the power receiver may transmit the response message with a variable delay that however may be known to be within a given interval, say with a delay between 200-400µs. The synchronizer 209 may then determine the start time for the first message as a given time prior to the center point of the communication time interval where the given time is determined as the duration of the first message plus half the maximum duration of the response message plus the median delay (300 µs). For a maximum duration response message and with a median delay, this will result in the response message being received in the middle/ center of the communication time interval. If the actual delay is higher or lower, the response message may be offset with respect to the center time but will still be within the communication time interval as the duration of this has been determined to incorporate variations in the delay. Similarly, if a shorter than maximum length response message is transmitted, the response message may not be centered in the communication time interval but will still fall within this. However, the first message will typically have a long duration and at least part, and typically all, of the first message is transmitted during the power transfer time interval.

It will be appreciated that in some embodiments, the power receiver may be provided with information relating to the timing of the repeating time frame and/or the power transfer time interval and/or the communication time interval. In such embodiments, the power receiver may adapt the timing of the transmission of the response message to fall within the communication time interval. However, in many embodiments, the power receiver may simply transmit a response message in response to receiving a suitable first message. The power receiver may possibly operate without knowledge of the timing of the repeating time frame (or even of the existence of this) and may asynchronously transmit a response message when receiving a first message. As mentioned, the response may include a delay which may be variable, but the repeating time frame and the power transmitter operation may be adapted to account for such variations. Thus, in some embodiments, the timing of the response message is given by the timing of the first message, and thus the timing and synchronization of the transmission and receiving of the response message is accomplished by the power transmitter, and specifically the synchronizer 209 of the power transmitter.

A particular advantage of the described approach is that it allows for shorter communication time intervals and gaps in the power transfer signal. In particular, the duration of the communication time interval is not dependent on the length of the first message. This may allow substantially longer first messages to be transmitted in many embodiments and applications. Similarly, more response data may be included for the same communication time interval duration than if bilateral communication must be performed in the same communication time interval.

Thus, an advantage of the approach is that it may allow substantially more data to be communicated between the power transmitter and the power receiver. This may enable new applications and functionality and allow an enhanced power transfer operation.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an inductive power transfer signal; the power transmitter (101) comprising:
an output circuit (203, 103) comprising a transmitter coil (103) arranged to generate the power transfer signal in response to a drive signal being applied to the output circuit (203, 103);
a driver (201) arranged to generate the drive signal;
a communicator (207) arranged to transmit messages to the power receiver (105) using amplitude modulation and to receive messages from the power receiver (105) using load modulation;
a controller (205) arranged to control the driver (201) to generating of the drive signal to apply a repeating time frame to the power transfer signal comprising at least one power transfer interval during which the power transfer signal is arranged to transfer power to the power receiver (105) and at least one communication time interval during which no power transfer signal is generated; and
a synchronizer (209) arranged to control the power transmitter to transmit at least part of a first message from the power transmitter (101) to the power receiver (105) during a power transfer time interval and to receive a response message from the power receiver (105) during a communication time interval.

2. The power transmitter of claim 1 wherein the synchronizer (209) is arranged to adapt a timing of transmitting the first message in response to the timing property of the communication time interval.

3. The power transmitter of claim 1 or 2 wherein the synchronizer (209) is arranged to adapt a timing property of the communication time interval.

4. The power transmitter of claim 2 or 3 wherein the synchronizer (209) is arranged to adapt at least one of the timing of the transmitting the first message and the timing property of the communication time interval in response to a property of the first message.

5. The power transmitter of claim 4 wherein the property of the first message is at least one of:
a length of the first message; and
a property of at least one predetermined response message to the first message.

6. The power transmitter of any of claims 3-5 wherein the timing property is a duration of the communication time interval.

7. The power transmitter of claim 6 wherein the synchronizer (209) is arranged to adapt the duration in response to a communication rate for communicating at least one of the first message and the response message.

8. The power transmitter of any of claims 3-7 wherein the synchronizer (209) is arranged to adapt the timing property in response to a property of the response message.

9. The power transmitter of any of claims 3-8 wherein the driver (201) is supplied by a varying power supply signal and the synchronizer (209) is arranged to adapt the timing property in response to a timing of variations in the varying power supply signal.

10. The power transmitter of claim 9 wherein the synchronizer (209) is arranged to align a center time of the communication time interval with a signal minimum for the varying power supply signal.

11. The apparatus of any previous claim wherein a duration of the communication time interval does not exceed 1 msec.

12. The apparatus of any previous claim wherein the synchronizer (209) is arranged to terminate the communication time interval in response to a detection of an end of the response message.

13. The apparatus of any previous claim wherein the power transfer time interval comprises a power down interval immediately prior to the communication time interval and the synchronizer (209) is arranged to time a transmission of the first message to at least partly be transmitted during the power down interval.

14. A method of operation for a power transmitter (101) wirelessly providing power to a power receiver (105) via an inductive power transfer signal; the power transmitter (101) comprising:
an output circuit (203, 103) comprising a transmitter coil (103) arranged to generate the power transfer signal in response to a drive signal being applied to the output circuit (203, 103); and the method comprising:
generating the drive signal;
transmitting messages to the power receiver (105) using amplitude modulation and receiving messages from the power receiver (105) using load modulation;
controlling the driver (201) to generating of the drive signal to apply a repeating time frame to the power transfer signal comprising at least one power transfer interval during which the power transfer signal is arranged to transfer power to the power receiver (105) and at least one communication time interval during which no power transfer signal is generated; and
controlling the power transmitter to transmit at least part of a first message from the power transmitter (101) to the power receiver (105) during a power transfer time interval and to receive a response message from the power receiver (105) during a communication time interval.
